# EUROPEAN PATENT APPLICATION

(11) **EP 4 813 923 A1**
(43) Date of publication of application: **30.09.2026**
(21) Application number: 26166907.1
(22) Date of filing: 23.03.2026
(51) Int. Cl.: C01G 51/42, H01M 4/525

(54) **POSITIVE ELECTRODE ACTIVE MATERIALS, AND POSITIVE ELECTRODES AND RECHARGEABLE LITHIUM BATTERIES INCLUDING THE SAME**

(30) Priority: 24.03.2025 KR 20250037452; 19.03.2026 KR 20260050014
(71) Applicant: SAMSUNG SDI CO., LTD., Yongin-si, Gyeonggi-do 17084 (KR)
(72) Inventor: CHO, Yongmok, 17084 Yongin-si (KR); CHOI, Minjae, 17084 Yongin-si (KR); CHUNG, Hyunjei, 17084 Yongin-si (KR); LEE, Sangheon, 17084 Yongin-si (KR)
(74) Representative: Maiwald GmbH

(57) **Abstract**

A positive electrode active material, a method of preparing the same, a positive electrode, and a rechargeable lithium battery including the same, the positive electrode active material that includes a core that includes a lithium cobalt-based oxide and a coating layer on a surface of the core and that includes Y and La.

## Description

### BACKGROUND

### 1. Field

Positive electrode active materials, and positive electrodes and lithium rechargeable batteries including the same are disclosed.

### 2. Description of the Related Art

The recent rapid spread of electronic devices using batteries such as mobile phones, notebook computers, and electric vehicles, has led to an increase in the demand for rechargeable batteries having high energy density and high capacity. Accordingly, research and development for improving the performance of rechargeable lithium batteries is actively progressing.

A rechargeable lithium battery includes a positive electrode and a negative electrode including an active material capable of intercalating and deintercalating lithium ions, and an electrolyte solution, and electrical energy is produced by oxidation and reduction reactions if (e.g., when) lithium ions are intercalated/deintercalated at the positive and negative electrodes.

In particular, rechargeable lithium batteries used in mobile phones mainly use lithium cobalt-based oxide (LCO) as the positive electrode active material. The lithium cobalt oxide has a high theoretical capacity (about 274 mAh/g), but in reality, only half of the capacity can be used due to the problem of capacity reduction caused by phase transition.

In one or more embodiments, charging and discharging at high voltages is required or useful to improve the energy density of rechargeable lithium batteries, and the upper limit charging voltage of rechargeable lithium batteries for mobile phones currently in commercial use is about 4.48 V, but development is currently underway to increase it to 4.5 V or higher. However, at high voltages, lithium cobalt-based oxides undergo irreversible phase transitions and side reactions with the electrolyte solution may occur, causing various problems.

Accordingly, research on lithium cobalt-based oxides that can stably achieve high capacity even under high voltage and high temperature conditions is necessary or desired.

### SUMMARY

One or more embodiments include a positive electrode active material having excellent or suitable storage characteristics under high voltage and high temperature conditions and capable of implementing high capacity, and a method of preparing the same.

One or more embodiments include a positive electrode that includes the positive electrode active material, and a rechargeable lithium battery that has excellent or suitable thermal stability under high voltage and high temperature and very excellent or suitable storage characteristics.

One or more embodiments include a positive electrode active material that includes a core including a lithium cobalt-based oxide and a coating layer on a surface of the core that includes Y and La.

One or more embodiments include a positive electrode that includes a positive electrode current collector and a positive electrode active material layer on the positive electrode current collector and includes the positive electrode active material.

A rechargeable lithium battery according to one or more embodiments includes the aforementioned positive electrode, a negative electrode, and an electrolyte.

The positive electrode active material according to one or more embodiments has excellent or suitable storage characteristics under high voltage and high temperature conditions and can realize high capacity.

According to one or more embodiments, a rechargeable lithium battery includes the positive electrode active material, thereby having excellent or suitable thermal stability under high voltage and high temperature and excellent or suitable storage characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIGS. 1-4 are schematic views that show rechargeable lithium batteries according to one or more embodiments.
FIG. 5 is a graph that shows charge and discharge characteristics during high-temperature continuous charging of the rechargeable lithium battery cells according to Examples 1 and 2 and Comparative Examples 1 and 2.

### DETAILED DESCRIPTION

Hereinafter, embodiments of the present disclosure will be described in more detail. However, these embodiments are presented as an example, and the present disclosure is not limited thereto, and the present disclosure is defined by the scope of the claims described below.

As used herein, if (e.g., when) specific definition is not otherwise provided, it will be understood that if (e.g., when) an element such as a layer, film, region, or substrate is referred to as being "on" another element, it can be directly on the other element or intervening elements may also be present.

Unless otherwise specified in this disclosure, what is indicated in the singular may also include the plural. In one or more embodiments, unless otherwise specified, "A or B" may mean "including A, including B, or including A and B".

As used herein, "combination thereof" means a mixture, laminate, composite, copolymer, alloy, blend, reaction product, and/or the like of the constituents.

As used herein, if (e.g., when) a definition is not otherwise provided, a particle diameter may be an average particle diameter. In one or more embodiments, the particle diameter means the average particle diameter (D₅₀), which means the diameter of particles having a cumulative volume of 50 volume% in the particle size distribution. The average particle size (D₅₀) may be measured by a method well known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D₅₀) value may be easily obtained through a calculation. Alternatively, it can be measured using a laser diffraction method. If (e.g., when) measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device.

As used herein, "metal" is interpreted as a concept including general metals, transition metals, and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements of groups 1 and 2 excluding H (but including Be) are regarded as representing metals.

A positive electrode active material according to one or more embodiments includes a core that includes a lithium cobalt-based oxide and a coating layer on a surface of the core and includes Y and La.

A positive electrode active material according to one or more embodiments may realize a high capacity by strengthening the coating layer by suitably or optimally controlling the type (kind), content (amount), and combination of elements coated on the surface, thereby exhibiting excellent or suitable storage characteristics even under high voltage and high temperature conditions of greater than or equal to about 4.5 V.

For example, the positive electrode active material may be driven under a condition where the upper limit voltage of the charge is greater than or equal to about 4.5 V, for example, greater than or equal to about 4.51 V, greater than or equal to about 4.52 V, greater than or equal to about 4.53 V, greater than or equal to about 4.54 V, greater than or equal to about 4.55 V, greater than or equal to about 4.6 V, or greater than or equal to about 4.61 V.

As utilized herein, the term "about," or similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, ± 20%, ± 10%, or ± 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

### Coating Layer

The coating layer includes Y (yttrium) and La (lanthanum).

La is a rare earth element that belongs to the lanthanides group in the periodic table of elements, and is an element with a large atomic radius of about 187 pm. If (e.g., when) such La is coated on lithium cobalt-based oxide together with Y that has an atomic radius of about 180 pm, the surface coating layer can be strengthened to realize a positive electrode active material with particularly excellent suitable storage characteristics under high-temperature, high-voltage conditions.

For example, based on a total weight of the metal that excludes lithium in the positive electrode active material, a sum of a content of Y and a content of La may be greater than or equal to about 0.05 wt%, greater than or equal to about 0.08 wt%, greater than or equal to about 0.085 wt%, greater than or equal to about 0.09 wt%, greater than or equal to about 0.1 wt%, or greater than or equal to about 0.12 wt%, and may be less than or equal to about 0.25 wt%, less than or equal to about 0.23 wt%, less than or equal to about 0.22 wt%, or less than or equal to about 0.21 wt%.

For example, based on a total weight of metal that excludes lithium in the positive electrode active material, the sum of the weights of Y and La may be greater than about 0.1 wt% and less than about 0.25 wt%, for example, greater than about 0.1 wt% and less than about 0.22 wt%, or about 0.12 wt% to about 0.21 wt%.

If (e.g., when) the above numerical range is satisfied, Y and La are coated in a suitable or optimal content in the coating layer, so that a positive electrode active material has excellent or suitable storage characteristics may be realized even under high voltage and high temperature conditions.

For example, based on a total weight of the metal that excludes lithium in the positive electrode active material, the content of Y may be greater than or equal to about 0.03 wt%, greater than or equal to about 0.05 wt%, or greater than or equal to about 0.07 wt%, and may be less than or equal to about 0.2 wt%, or less than or equal to about 0.18 wt%. For example, based on a total weight of the metal that excludes lithium in the positive electrode active material, the content of Y may be greater than about 0.05 wt% and less than about 0.2 wt%, for example, about 0.07 wt% to about 0.18 wt%.

For example, based on a total weight of the metal that excludes lithium in the positive electrode active material, the content of La may be greater than or equal to about 0.015 wt%, greater than or equal to about 0.02 wt%, greater than or equal to about 0.03 wt%, or greater than or equal to about 0.04 wt%, and may be less than or equal to about 0.12 wt%, less than or equal to about 0.1 wt%, or less than or equal to about 0.07 wt%. For example, based on a total weight of the metal that excludes lithium in the positive electrode active material, the content of La may be greater than about 0.02 wt% and less than about 0.1 wt%, for example, about 0.03 wt% to about 0.07 wt%.

If (e.g., when) the above numerical range is satisfied, Y and La are each coated in a suitable or optimal content in the coating layer, so that a positive electrode active material has excellent or suitable storage characteristics can be realized even under high voltage and high temperature conditions.

For example, the coating layer may further include M, wherein M may include Zr (zirconium), Ti (titanium), Hf (hafnium), Sc (scandium), Ce (cerium), W (tungsten), Nb (niobium), or a combination thereof, and as an example, M may include Zr. If (e.g., when) the coating layer further includes M, the coating layer is further strengthened, and the high-temperature storage characteristics of the positive electrode active material are further improved.

For example, based on a total weight of the metal that excludes lithium in the positive electrode active material, the sum of the content of Y, the content of La, and the content of M may be greater than or equal to about 0.11 wt%, greater than or equal to about 0.15 wt%, greater than or equal to about 0.185 wt%, greater than or equal to about 0.19 wt%, greater than or equal to about 0.2 wt%, or greater than or equal to about 0.21 wt%, and may be less than or equal to about 0.26 wt%, less than or equal to about 0.25 wt%, or less than or equal to about 0.24 wt%. For example, based on a total weight of metal that excludes lithium in the positive electrode active material, a sum of a content of Y, a content of La, and a content of M may be greater than about 0.2 wt% and less than or equal to about 0.25 wt%, for example, about 0.21 wt% to about 0.24 wt%. If (e.g., when) the above numerical range is satisfied, Y, La, and M are coated in a suitable or optimal content in the coating layer, so that a positive electrode active material has excellent or suitable storage characteristics can be realized even under high voltage and high temperature conditions.

For example, based on a total weight of the metal that excludes lithium in the positive electrode active material, the content of M may be greater than or equal to about 0.01 wt%, greater than or equal to about 0.02 wt%, or greater than or equal to about 0.03 wt%, and may be less than or equal to about 0.12 wt%, or less than or equal to about 0.1 wt%. For example, based on a total weight of the metal that excludes lithium in the positive electrode active material, the content of M may be about 0.03 wt% to about 0.12 wt%, for example, about 0.03 wt% to about 0.1 wt%. If (e.g., when) the above numerical range is satisfied, Y, La, and M are each coated in a suitable or optimal content in the coating layer, so that a positive electrode active material has excellent or suitable storage characteristics can be realized even under high voltage and high temperature conditions.

For example, the coating layer may further include Al (aluminum), in which case the electrolyte decomposition reaction on the surface of the positive electrode active material may be further suppressed or reduced and high temperature stability may be further improved. Also, as will be described later, the core may be a lithium cobalt-based oxide doped with Al. In other words, the positive electrode active material according to an embodiment may include Al, and the Al may be included in both the core and the coating layer.

For example, based on a total weight of the metal that excludes lithium in the positive electrode active material, the content of Al may be greater than or equal to about 0.1 wt%, greater than or equal to about 0.5 wt%, greater than or equal to about 0.7 wt%, or greater than or equal to about 0.8 wt%, and may be less than or equal to about 1 wt%, less than or equal to about 0.95 wt%, or less than or equal to about 0.9 wt%. For example, based on a total weight of the metal that excludes lithium in the positive electrode active material, the content of Al may be included at about 0.1 wt% to about 1 wt%.

For example, based on a total weight of the metal that excludes lithium in the positive electrode active material, the content of Al included in the coating layer may be about 0.01 wt% to about 0.5 wt%, about 0.05 wt% to about 0.3 wt%, or about 0.08 wt% to about 0.2 wt%.

For example, based on a total weight of the metal that excludes lithium in the positive electrode active material, the content of Al doped in the core may be about 0.1 wt% to about 0.9 wt%, about 0.5 wt% to about 0.85 wt%, or about 0.6 wt% to about 0.8 wt%.

If (e.g., when) the above numerical range is satisfied, Al is coated in a suitable or optimal content on the coating layer to suppress or reduce an electrolyte decomposition reaction on the surface of the active material and improve high temperature stability.

For example, the composition and content included in the coating layer can be measured through inductively coupled plasma (ICP) spectroscopy analysis or SEM-EDS (Scanning Electron Microscopy-Energy Dispersive Spectroscopy) analysis.

For example, the coating layer may be in the form of a composite oxide that includes Y, La, M, Al, or a combination thereof. For example, the coating layer may include Y-La oxide, Y-La-M oxide, Y-La-Al oxide, Y-La-M-Al oxide, or a combination thereof.

For example, the shape of the coating layer may be formed in the form of a continuous film, a discontinuous film shape such as an island shape, or a particle shape or a dot shape.

For example, because the atomic radii of Y and La are relatively large, they may be distributed in the form of a coating layer on the surface of the core rather than being doped into the core. At this time, they may be distributed in the form of particles on the coating layer or in a discontinuous shape such as an island shape.

For example, if (e.g., when) the coating layer is formed in the form of a continuous film, the thickness of the coating layer may be about 0.01 µm to about 0.2 µm, for example, about 0.02 µm to about 0.15 µm, or about 0.03 µm to about 0.15 µm. If (e.g., when) the above numerical range is satisfied, a positive electrode active material that has excellent or suitable storage characteristics and high capacity under high voltage and high temperature conditions may be realized.

For example, the thickness of the coating layer may be measured by fixing the positive electrode active material particles in an epoxy resin or the like, preparing a thin cross-sectional specimen using a focused ion beam (FIB), and performing transmission electron microscopy (TEM) observation on the cross-section. Also, optionally, the continuity and uniformity of the coating layer may be supplementarily confirmed by observing the cross-section of the specimen with a scanning electron microscope (SEM) or FIB-SEM.

### Core

The core includes a lithium cobalt-based oxide, and the lithium cobalt-based oxide may be represented by Chemical Formula 1.

Chemical Formula 1 Liₐ₁COₓ₁ Mg_{y1}Al_{z1} M¹_{w1} O_{2-b1}X_{b1}

In Chemical Formula 1, 0.8≤a1≤1.8, 0.7≤x1≤1, 0≤y1≤0.01, 0≤z1≤0.05, 0≤w1≤0.15, 0.9≤x1+y1+z1+w1≤1.1, 0≤b1≤0.1,

M¹ is Zr, Y, La, Ti, B, Ba, Ca, Ce, Cr, Cu, F, Fe, Mn, Mo, Nb, P, S, Si, Sr, V, W, or a combination thereof, and X is F, P, S, or a combination thereof.

The lithium cobalt-based oxide may be doped with Mg and Al, and optionally may be additionally doped with the M¹ element.

Accordingly, the crystal structure of lithium cobalt-based oxide can be stabilized, thereby preventing or reducing crystal structure collapse even under high voltage and high temperature, thereby improving high voltage stability and thermal stability. In one or more embodiments, it is possible to prevent or reduce deterioration of the positive electrode active material during battery operation by improving the cycle-life characteristics.

For example, in the chemical formula 1, 0.9≤a1≤1.5, or 0.9≤a1≤1.2, 0.7≤x1≤0.99, 0.8≤x1≤0.99, or 0.8≤x1≤0.975, 0.003≤y1≤0.01, 0.001≤y1≤0.01, or 0.001≤y1≤0.005, and 0.01≤z1≤0.05 or 0.03≤z1≤0.04.

If (e.g., when) the above numerical range is satisfied, the lithium cobalt-based oxide can be doped with a suitable or appropriate amount of Mg, Al, and M1 to improve high voltage stability and thermal stability.

For example, the lithium cobalt-based oxide may be small particles, large particles, or a mixture of small and large particles. The average particle diameter (D₅₀) of the above-mentioned large particles may be about 9 µm to about 25 µm, and the average particle diameter (D₅₀) of the above-mentioned small particles may be about 0.5 µm to about 8 µm. The average particle diameter (D₅₀) of the large particles may be, for example, about 10 µm to about 20 µm, about 14 µm to about 17 µm, or about 15 µm to about 18 µm, and the average particle diameter (D₅₀) of the small particles may be, for example, about 1 µm to about 6 µm, or about 3 µm to about 6 µm.

The average particle diameter (D₅₀) of the large particles and the average particle diameter (D₅₀) of the small particles may be measured using a laser diffraction particle size analyzer utilizing a laser diffraction method. For example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device.

If (e.g., when) the lithium cobalt-based oxide is a mixture of the small particles and the large particles, a weight ratio of the small particles and the large particles in the mixture of the small particles and the large particles may be about 5:5 to about 1:9, about 4:6 to about 1:9, about 3:7 to about 1:9, or about 3:7 to about 2:8. If (e.g., when) the weight ratio of the small particles to the large particles in the mixture of the above small particles and large particles satisfies the above range, cycle-life characteristics may be improved while maximizing or increasing the capacity and energy density.

For example, the lithium cobalt-based oxide may be a mixture of the small particles and the large particles, each independently a compound represented by Chemical Formula 1.

For example, the small particles and the large particles may each include Al. For example, the small particles and the large particles may each be doped with Al or coated with Al.

For example, a ratio of the Al weight (wt%) included in the large particle to the Al weight (wt%) included in the small particle may be less than about 1, and for example, may be about 0.8 to about 0.99, about 0.85 to about 0.95, about 0.9 to about 0.95, or about 0.85 to about 0.9.

In one or more embodiments, the weight of Al included in the small particles may be higher than the weight of Al included in the large particles. Because the small particles deteriorate more easily than the large particles, if (e.g., when) the content of Al (coating amount and/or doping amount) of the small particles is increased compared to the large particles, the structure of the lithium cobalt-based oxide may be stabilized to prevent or reduce deterioration, thereby effectively improving cycle-life characteristics of the battery.

The shape of the lithium cobalt-based oxide particles may be irregular, spherical, elliptical, and/or the like.

### Method of Preparing Positive Electrode Active Material

A method for preparing a positive electrode active material according to an embodiment includes: mixing an yttrium precursor and a lanthanum precursor into a lithium cobalt-based oxide to obtain a precursor mixture; and subjecting the precursor mixture to heat treatment to form a coating layer on a surface of the lithium cobalt-based oxide.

For example, the lithium cobalt-based oxide may be prepared by mixing a cobalt precursor, a lithium precursor, and a metal precursor to be doped (e.g., a magnesium precursor, an aluminum precursor, an M¹ precursor, and/or the like) to prepare a mixture, and then heat-treating the mixture.

The mixing may be performed by dry mixing, such as mechanical mixing, using a ball mill, a Banbury mixer, a homogenizer, a Hensel mixer, and/or the like.

The heat treatment may be performed in an air or oxygen atmosphere and may be performed at, for example, about 900 °C to about 1050 °C. Here, the oxygen atmosphere may be formed by using oxygen alone or by using oxygen, nitrogen, and an inert gas together. Heat treatment time varies depending on the heat treatment temperature. For example, the heat treatment may be performed at the heat treatment temperature for about 10 to about 20 hours.

M¹ may be Zr, Y, La, Ti, B, Ba, Ca, Ce, Cr, Cu, F, Fe, Mn, Mo, Nb, P, S, Si, Sr, V, W, or a combination thereof.

For example, a mixture may be prepared by mixing the lithium precursor, cobalt precursor, and metal precursor while stoichiometrically controlling the mixing ratio in order to obtain a lithium cobalt-based oxide.

The cobalt precursor may be one or more selected from among cobalt carbonate, cobalt hydroxide, cobalt chloride, cobalt sulfate, cobalt nitrate, and cobalt oxide.

The lithium precursor may be one or more selected from among lithium hydroxide (LiOH), lithium carbonate (Li₂CO₃), lithium chloride, lithium sulfate (Li₂SO₄), and lithium nitrate (LiNO₃).

The aluminum precursor may be one or more selected from among aluminum sulfate, aluminum chloride, and aluminum hydroxide.

The magnesium precursor may be one or more selected from among magnesium oxide, magnesium hydroxide, magnesium sulfate, and magnesium chloride.

The M¹ precursor may be one or more selected from among a hydroxide, a chloride, a sulfate, and an oxide that includes M¹ metal.

For example, the lithium cobalt-based oxide may be prepared by preparing the small particles and the large particles separately and then mixing them so that the weight ratio of the small particles and the large particles is about 5:5 to about 1:9.

For example, by controlling the amount of the aluminum precursor if (e.g., when) preparing the small particle and the large particle, the content of Al included in the small particle and the large particle may be designed to be within a suitable or desired range, and the content of Al contained in the final positive electrode active material may be controlled.

Next, a method for preparing a positive electrode active material according to one or more embodiments includes forming a coating layer on a surface of the prepared lithium cobalt-based oxide, wherein the forming of the coating layer includes mixing an yttrium precursor and a lanthanum precursor into the lithium cobalt-based oxide to obtain a precursor mixture and subjecting the precursor mixture to heat treatment.

For example, in the obtaining of the precursor mixture, the precursor mixture may be obtained by further mixing an aluminum precursor and an M precursor into the lithium cobalt-based oxide.

The yttrium precursor may include at least one selected from among hydroxides, chlorides, sulfates, and oxides, which include yttrium, for example, yttrium oxides.

The lanthanum precursor may include at least one selected from among hydroxides, chlorides, sulfates, and oxides, which include lanthanum, for example, lanthanum oxides.

The aluminum precursor may include at least one selected from among aluminum oxides, aluminum sulfates, aluminum chlorides, and aluminum hydroxides, for example, aluminum oxides.

The M precursor may include at least one selected from among hydroxides, chlorides, sulfates, and oxides that include M, wherein the M may include Zr (zirconium), Ti (titanium), Hf (hafnium), Sc (scandium), Ce (cerium), W (tungsten), Nb (niobium), or a combination thereof.

The mixing may be performed by dry mixing, and the dry mixing may be performed by dry mixing such as mechanical mixing using, for example, a ball mill, a Banbury mixer, a homogenizer, a Hensel mixer, and/or the like. The dry mixing may reduce preparation costs compared to wet mixing.

The heat treatment may be performed under an oxygen atmosphere, wherein the oxygen atmosphere may be formed by using oxygen alone or using oxygen, nitrogen, and inert gas together.

The heat treatment is not particularly limited in terms of temperature but may be, for example, performed at about 850 °C to about 1100 °C, for example, about 900 °C to about 1100 °C, or about 900 °C to about 1050 °C. In one or more embodiments, the heat treatment is not particularly limited in terms of time, but may vary according to the heat treatment temperature, for example, may be performed for about 10 hours to about 20 hours.

If (e.g., when) heat-treated under the temperature and time conditions after the dry mixing process, a positive electrode active material that includes a coating layer uniformly (e.g., substantially uniformly) coated with Y and La, or optionally, Al and M may be provided.

### Positive Electrode

According to one or more embodiments, a positive electrode includes a positive electrode current collector and a positive electrode active material layer on the positive electrode current collector and includes the aforementioned positive electrode active material.

The positive electrode active material layer includes a positive electrode active material and may further include a binder and/or a conductive material (e.g., an electrically conductive material). For example, the positive electrode may further include an additive that can act as a sacrificial positive electrode.

An amount of the positive electrode active material may be about 90 wt% to about 99.5 wt% based on 100 wt% of the positive electrode active material layer, and the contents of the binder and conductive material may be about 0.5 wt% to about 5 wt%, respectively, based on 100 wt% of the positive electrode active material layer.

The positive electrode active material layer may further include other positive electrode active materials commonly used in rechargeable lithium batteries in addition to the aforementioned positive electrode active materials. The other positive electrode active materials may further include one or more selected from among lithium cobalt oxide, lithium nickel cobalt manganese oxide, lithium nickel cobalt aluminum oxide, lithium iron phosphate, and lithium manganese oxide, but are not necessarily limited thereto, and any positive electrode active material available in the art may be used.

For example, the other positive electrode active materials may further include a compound represented by any one selected from among chemical formulas LiₐA_{1-b}B_{b}D₂ (wherein, in the above chemical formula, 0.90≤a≤1.8, and 0≤b≤0.5); LiₐE_{1-b}B_{b}O_{2-c}D_{c} (wherein, in the above chemical formula, 0.90≤a≤1.8, 0≤b≤0.5, 0≤c≤0.05); LiE_{2-b}B_{b}O_{4-c}D_{c} (wherein, in the above chemical formula, 0≤b≤0.5, 0≤c≤0.05); LiₐNi_{1-b-c}Co_{b}B_{c}D_{α} (wherein, in the above chemical formula, 0.90≤a≤1.8, 0≤b≤0.5, 0≤c≤0.05, 0<α≤2); LiₐNi_{1-b-c}Co_{b}B_{c}O_{2-α}F_{α} (wherein, in the above chemical formula, 0.90≤a≤1.8, 0≤b≤0.5, 0≤c≤0.05, 0<α<2); LiₐNi_{1-b-c}Mn_{b}B_{c}D_{α} (wherein, in the above chemical formula, 0.90≤a≤1.8, 0≤b≤0.5, 0≤c≤0.05, 0<α≤2); LiₐNi_{1-b-c}Mn_{b}B_{c}O_{2-α}F_{α} (wherein, in the above chemical formula, 0.90≤a≤1.8, 0≤b≤0.5, 0≤c≤0.05, 0<α<2); LiₐNi_{b}E_{c}G_{d}O₂ (wherein, in the above chemical formula, 0.90≤a≤1.8, 0≤b≤0.9, 0≤c≤0.5, 0.001≤d≤ 0.1); LiₐNi_{b}Co_{c}Mn _{d}GeO₂ (wherein, in the above chemical formula, 0.90≤a≤1.8, 0≤b≤0.9, 0≤c≤0.5, 0≤d≤0.5, 0.001≤e≤0.1); LiₐNiG_{b}O₂ (wherein, in the above chemical formula, 0.90≤a≤1.8, 0.001≤b≤0.1); LiₐCoG_{b}O₂ (wherein, in the above chemical formula, 0.90≤a≤1.8, 0.001 ≤b≤0.1); LiₐMnG_{b}O₂ (wherein, in the above chemical formula, 0.90≤a≤1.8, 0.001 ≤b≤0.1); LiₐMn₂G_{b}O₄ (wherein, in the above chemical formula, 0.90≤a≤1.8, 0.001≤b≤0.1); QO₂; QS₂; LiQS₂; V₂O₅; LiV₂O₅; LilO₂; LiNiVO₄; Li_{(3-f)}J₂(PO₄)₃(0≤f≤2); Li_{(3-f)}Fe₂(PO₄)₃(0≤f≤2); and LiFePO₄. In the above chemical formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The binder serves to well attach the positive electrode active material particles to each other and also to well attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer that includes ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but are not limited thereto.

The conductive material is used to impart or increase conductivity (e.g., electrical conductivity) to the electrode, and any material that does not cause chemical change and conducts electrons can be used in the battery. Examples of the conductive material may include a carbon-based material such as natural graphite, artificial graphite, carbon black, acetylene black, Ketjen black, a carbon fiber, a carbon nanofiber, and carbon nanotube; a metal-based material containing copper, nickel, aluminum, silver, and/or the like, in a form of a metal powder or a metal fiber; a conductive polymer (e.g., an electrically conductive polymer) such as a polyphenylene derivative; or a mixture thereof.

For example, a loading level of the positive electrode active material layer may be about 10 mg/cm² to about 30 mg/cm², for example, about 15 mg/cm² to about 25 mg/cm², about 10 mg/cm² to about 20 mg/cm², or about 15 mg/cm² to about 18 mg/cm².

For example, a mixture density of the positive electrode active material layer may be about 4.0 g/cc to about 4.25 g/cc, for example about 4.1 g/cc to about 4.25 g/cc, about 4.15 g/cc to about 4.25 g/cc, or about 4.17 g/cc to about 4.25 g/cc.

The mixture density refers to the weight per unit volume of the positive electrode active material layer formed on the current collector in the positive electrode. The positive electrode active material layer includes the aforementioned positive electrode active material, so that the loading level and the mixture density satisfy the numerical ranges, and thus the energy density is very high.

Al may be used as the current collector, but is not limited thereto.

### Rechargeable Lithium Battery

A rechargeable lithium battery according to one or more embodiments includes the aforementioned positive electrode, a negative electrode, and an electrolyte. Since the rechargeable lithium battery includes the aforementioned positive electrode active material, it has excellent or suitable thermal stability under high voltage and high temperature and excellent or suitable storage characteristics.

The rechargeable lithium battery may include a positive electrode, a negative electrode, a separator between the positive electrode and the negative electrode, and an electrolyte.

One or more embodiments include an all-solid-state rechargeable battery that includes the positive electrode, the negative electrode, and a solid electrolyte layer between the positive electrode and the negative electrode.

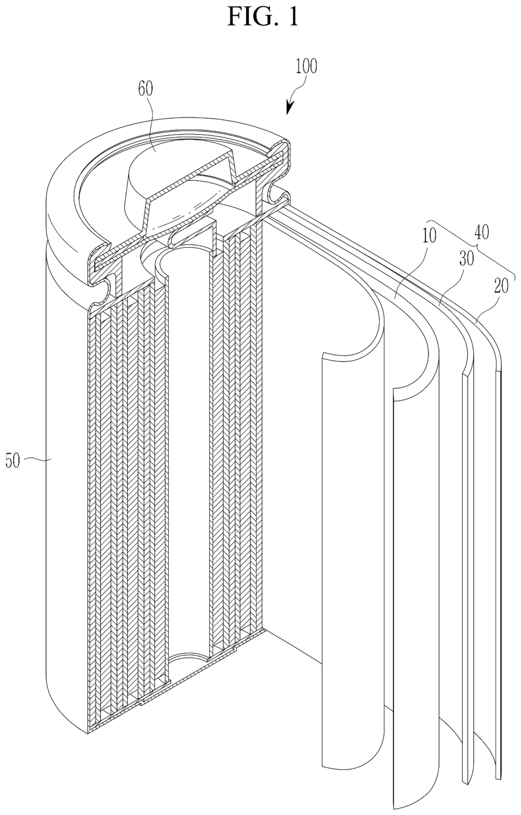

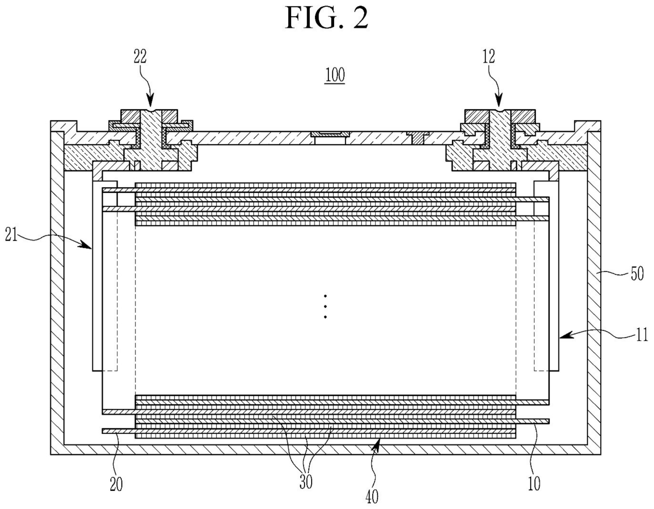

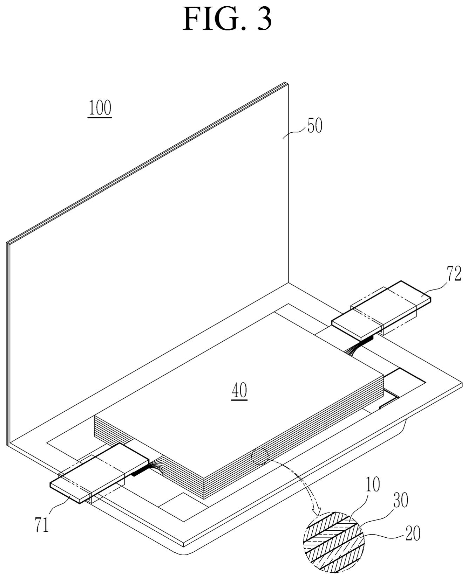

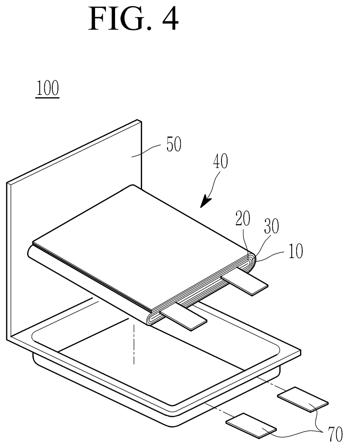

The rechargeable lithium battery may be classified into cylindrical, prismatic, pouch, coin, and/or the like depending on their shape. FIGS. 1-4 are schematic views illustrating a rechargeable lithium battery according to one or more embodiments. FIG. 1 shows a cylindrical battery, FIG. 2 shows a prismatic battery, and FIGS. 3 and 4 show pouch-type batteries. Referring to FIGS. 1-4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 sealing the case 50 as shown in FIG. 1. In one or more embodiments in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or various suitable types (kinds) of electric devices, but the present disclosure is not limited thereto.

For example, the upper limit charge voltage of the rechargeable lithium battery may be greater than or equal to about 4.5 V, for example, greater than or equal to about 4.51 V, greater than or equal to about 4.52 V, greater than or equal to about 4.53 V, greater than or equal to about 4.54 V, greater than or equal to about 4.55 V, greater than or equal to about 4.6 V, or greater than or equal to about 4.61 V.

Hereinafter, each component that constitutes a rechargeable lithium battery is described.

### Negative Electrode

The negative electrode for a rechargeable lithium battery includes a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder serves to well attach the negative electrode active material particles to each other and also to well attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

If (e.g., when) an aqueous binder is used as the negative electrode binder, a cellulose-based compound capable of imparting or increasing viscosity may be further included. The cellulose-based compound may include at least one selected from among carboxymethyl cellulose, hydroxypropyl methylcellulose, methyl cellulose, or an alkali metal salt thereof. The alkali metal may include Na, K, or Li.

The dry binder may be a polymer material capable of being fibrous, and may be, for example, polytetrafluoroethylene, polyvinylidene fluoride, a polyvinylidene fluoride-hexafluoropropylene copolymer, polyethylene oxide, or a combination thereof.

The conductive material is used to impart or increase conductivity (e.g., electrical conductivity) to the electrode, and any material that does not cause chemical change and conducts electrons can be used in the battery. Examples thereof may include a carbon-based material such as natural graphite, artificial graphite, carbon black, acetylene black, Ketjen black, a carbon fiber, a carbon nanofiber, and a carbon nanotube; a metal-based material that includes copper, nickel, aluminum, silver, and/or the like in a form of a metal powder or a metal fiber; a conductive polymer (e.g., an electrically conductive polymer) such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal (e.g., an electrically conductive metal), or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon, or a combination thereof. The crystalline carbon may be graphite such as non-shaped, sheet-shaped, flake-shaped, sphere-shaped, or fibershaped natural graphite or artificial graphite, and the amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOx (0 < x ≤ 2), a Si-Q alloy (wherein Q is selected from an alkali metal, an alkaline-earth metal, a Group 13 element, a Group 14 element (excluding Si), a Group 15 element, a Group 16 element, a transition metal, a rare earth element, or a combination thereof), or a combination thereof. The Sn-based negative electrode active material may include Sn, SnO₂, a Sn-based alloy, or a combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, it may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core that includes crystalline carbon and silicon particles and an amorphous carbon coating layer on a surface of the core.

The Si-based negative electrode active material and/or the Sn-based negative electrode active material may be used in combination with a carbon-based negative electrode active material.

### Electrolyte

The electrolyte for a rechargeable lithium battery may be, for example, an electrolyte solution, which includes a non-aqueous organic solvent and a lithium salt.

The non-aqueous organic solvent serves as a medium that transmits ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like; amides such as dimethylformamide; dioxolanes such as 1,3-dioxolane, 1,4-dioxolane, and the like; sulfolanes, and/or the like.

The non-aqueous organic solvents may be used alone or in combination of two or more.

In one or more embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer that includes an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, TEFLON, and polytetrafluoroethylene, or a copolymer or mixture of two or more thereof. The porous substrate may include glass fiber, and may be a film in which the polymer and the glass fiber are mixed.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and the inorganic material may be mixed in one coating layer, or a coating layer that includes an organic material and a coating layer that includes an inorganic material may be stacked.

Examples and comparative examples of the present disclosure are described below. However, the following examples are only examples of the present disclosure, and the present disclosure is not limited to the following examples.

### Examples

### Example 1

### (1) Preparation of Positive Electrode Active Material

Li₂CO₃ of a lithium precursor, Co₃O₄ (D₅₀=16 *µ*m) of a cobalt precursor, MgCO₃ of a magnesium precursor, and Al₂O₃ of an aluminum precursor were mixed to have a Li:Co molar ratio of 1.04:1, a Co:Mg molar ratio of 1:0.005, and a Co:Al molar ratio of 1:0.03 to prepare a mixture. The mixture was heat-treated at 1000 °C for 10 hours under an oxygen atmosphere to prepare lithium cobalt oxide Li_{1.04}CoMg_{0.005}Al_{0.03}O₂ as large particles (D₅₀=16µm).

In one or more embodiments, Li₂CO₃ of a lithium precursor, Co₃O₄ (D₅₀=4 *µ*m) of a cobalt precursor, MgCO₃ of a magnesium precursor, and Al₂O₃ of an aluminum precursor were mixed to have a Li:Co molar ratio of 1.04:1, a Co:Mg molar ratio of 1:0.005, and a Co:Al molar ratio of 1:0.03 to prepare a mixture. The mixture was heat-treated at 950 °C under an oxygen atmosphere for 10 hours to prepare lithium cobalt oxide Li_{1.04}CoMg_{0.005}Al_{0.03}O₂ as small particles (D₅₀=4µm).

Subsequently, the lithium cobalt oxide, in which the large particles and the small particles were mixed in a weight ratio of 8:2, was dry-mixed with Y₂O₃ (yttrium precursor), La₂O₃ (lanthanum precursor), ZrO₂ (zirconium precursor), and Al₂O₃ (aluminum precursor) in a ball mill and then, heat-treated at 950 °C for 10 hours under an oxygen atmosphere to prepare a positive electrode active material coated with Y, La, and Zr in each content shown in Table 1.

Each content of the coated elements was measured through inductively coupled plasma (ICP) spectroscopy analysis.

The content of Al, based on a total weight of metal that excludes lithium in the positive electrode active material, was 0.85 wt% all in examples and comparative examples. Also, the content of Al doped in the core, based on a total weight of metal that excludes lithium in the positive electrode active material, was about 0.75 wt% all in examples and comparative examples. Also, the content of Al included in the coating layer, based on a total weight of metal that excludes lithium in the positive electrode active material, was about 0.1 wt% all in examples and comparative examples.

In one or more embodiments, in Examples 1 to 13, Al wt% contained in the large particles to that contained in the small particles was designed to have a ratio of 0.9.

**Table 1**

| | Element content in positive electrode active material (wt%) | | | | |
|---|---|---|---|---|---|
| | Zr | Y | La | Y+La | Y+La+Zr |
| Example 1 | 0.03 | 0.15 | 0.03 | 0.18 | 0.21 |
| Example 2 | 0.1 | 0.1 | 0.03 | 0.13 | 0.23 |
| Example 3 | 0.1 | 0.08 | 0.04 | 0.12 | 0.22 |
| Example 4 | 0.03 | 0.18 | 0.03 | 0.21 | 0.24 |
| Example 5 | 0.1 | 0.07 | 0.015 | 0.085 | 0.185 |
| Example 6 | 0.03 | 0.05 | 0.03 | 0.08 | 0.11 |
| Example 7 | 0.1 | 0.03 | 0.02 | 0.05 | 0.15 |
| Example 8 | 0.1 | 0.05 | 0.04 | 0.09 | 0.19 |
| Example 9 | 0.03 | 0.2 | 0.03 | 0.23 | 0.26 |
| Comparative Example 1 | 0.2 | 0 | 0 | 0 | 0.2 |
| Comparative Example 2 | 0 | 0.2 | 0 | 0.2 | 0.2 |
| Comparative Example 3 | 0 | 0 | 0.2 | 0.2 | 0.2 |
| Comparative Example 4 | 0.1 | 0.1 | 0 | 0.1 | 0.2 |
| Comparative Example 5 | 0.1 | 0 | 0.1 | 0.1 | 0.2 |
| Example 10 | 0 | 0.1 | 0.1 | 0.2 | 0.2 |
| Example 11 | 0 | 0.1 | 0.12 | 0.22 | 0.22 |
| Example 12 | 0.12 | 0.08 | 0.04 | 0.12 | 0.24 |
| Example 13 | 0.07 | 0.07 | 0.07 | 0.14 | 0.21 |

### (2) Manufacturing of Rechargeable Lithium Battery Cell (Half-cell)

98.7 wt% of the positive electrode active material, 0.9 wt% of a polyvinylidene fluoride binder, and 0.4 wt% of a carbon nanotube conductive material were mixed in an N-methyl pyrrolidone solvent to prepare positive electrode active material layer slurry, and the slurry was coated on an aluminum foil current collector and then, dried and compressed to manufacture a positive electrode.

A polytetrafluoroethylene separator was arranged between the positive electrode and a lithium metal counter electrode, and an electrolyte solution was prepared by dissolving 1 M LiPF₆ in a mixed solvent of ethylene carbonate and dimethyl carbonate in a volume ratio of 3:7 was used therewith to manufacture a rechargeable lithium battery cell (half-cell) in a common method.

### (3) Manufacturing of Rechargeable Lithium Battery Cell (pouch-type full cell)

The positive electrode active material, polyvinylidene fluoride as a binder, and carbon nanotube as a conductive material were mixed in a weight ratio of 98.7:0.9:0.4 (= positive electrode active material:binder:conductive material), preparing a positive electrode active material composition. This composition was dispersed in an N-methyl pyrrolidone solvent to prepare a positive electrode active material slurry, which was coated at a loading level of 17 mg/cm² on a 10 µm-thick Al foil and then, dried and compressed to manufacture a positive electrode.

Herein, the positive electrode active material layer had a mixture density of about 4.2 g/cc after the compression and a thickness of about 40 µm.

In one or more embodiments, 97.5 wt% of graphite as a negative electrode active material, 1.5 wt% of carboxymethyl cellulose as a binder, and 1 wt% of styrene butadiene rubber were dispersed in distilled water to prepare a negative electrode active material slurry. This slurry was coated on a 10 µm-thick Cu foil and then, dried and compressed to manufacture a negative electrode.

A 10 µm-thick polyethylene separator housed in a case, was arranged to manufacture an electrode assembly between the positive electrode and the negative electrode, and an electrolyte was injected thereinto to manufacture a rechargeable lithium battery cell (100 mAh level pouch cell). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Examples 2 to 13 and Comparative Examples 1 to 5

A positive electrode active material, a positive electrode, and a rechargeable lithium battery cell were manufactured substantially in the same manner as in Example 1 except that each precursor was stoichiometrically controlled to have element contents in a coating layer as shown in Table 1 in preparing the positive electrode active material of Example 1.

### Evaluation Examples

### Evaluation Example 1: Heat Exposure Evaluation

The pouch-type full cells of Examples 1 to 2 and Comparative Examples 1 to 2 were evaluated with respect to heat exposure. For example, the full cells were measured with respect to a thickness before the heat exposure by using a vernier caliper and then, measured again with respect to a thickness after the heat exposure at 110 °C for 20 minutes, and the results are shown in Table 2.

**Table 2**

| | Thickness before heat exposure (mm) | Thickness after heat exposure (mm) |
|---|---|---|
| Example1 | 4.6 | 9.8 |
| Example2 | 4.3 | 7.9 |
| Comparative Example1 | 4.4 | 15.2 |
| Comparative Example2 | 4.3 | 17.6 |

Referring to Table 2, compared to Examples 1 and 2, which included a positive electrode active material coated with both Y and La, Comparative Examples 1 and 2, in which thermal stability of the positive electrode active material was deteriorated during the heat exposure, resultantly causing gas generation, were confirmed that the thickness of the cells significantly increased.

### Evaluation Example 2: High-temperature Continuous Charging Evaluation

The half-cells of the examples and the comparative examples were evaluated with respect to high-temperature continuous charging (Trickle charging).

For example, the cells were constant current (CC)-charged at 4.61 V and 0.2 C without discharging at 45 °C to measure a capacity retention rate (Retention, %) every 100 hours, which was shown in Table 3.

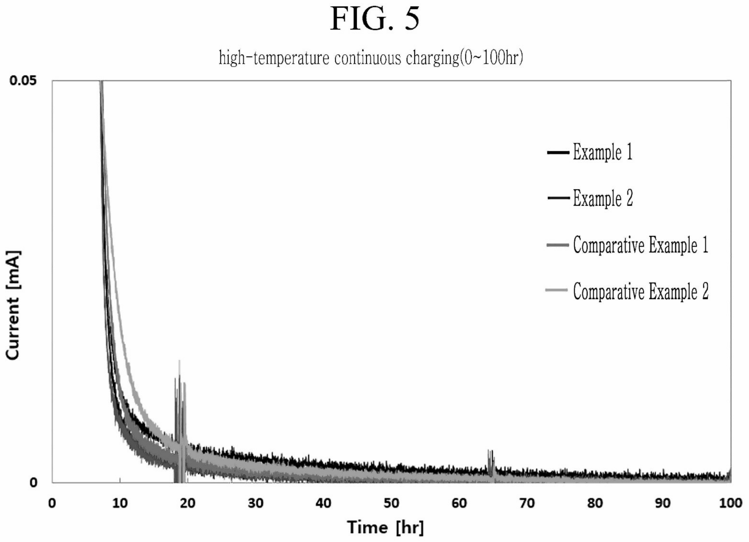

In one or more embodiments, the rechargeable lithium battery cells according to Examples 1 and 2 and Comparative Examples 1 and 2 were measured with respect to current changes during the high-temperature continuous charging for 100 hours, which was shown as a graph in FIG. 5.

**Table 3**

| | Capacity retention rate (%), @ 45 °C | | |
|---|---|---|---|
| | After 100hr | After 200hr | After 300hr |
| Example 1 | 91.4 | 77.1 | 60.3 |
| Example 2 | 91.8 | 77.9 | 61.8 |
| Example 3 | 91.2 | 77.0 | 60.9 |
| Example 4 | 92.0 | 80.1 | 62.5 |
| Example 5 | 91.0 | 76.0 | 61.0 |
| Example 6 | 90.2 | 73.5 | 58.1 |
| Example 7 | 90.4 | 73.0 | 58.4 |
| Example 8 | 90.5 | 73.3 | 58.9 |
| Example 9 | 91.0 | 73.9 | 59.5 |
| Comparative Example 1 | 90.2 | 72.2 | 55.2 |
| Comparative Example 2 | 91.4 | 71.4 | 56.2 |
| Comparative Example 3 | 91 | 71.0 | 55.8 |
| Comparative Example 4 | 90.8 | 73.2 | 57.0 |
| Comparative Example 5 | 90.4 | 70.0 | 55.0 |
| Example 10 | 91.4 | 74.6 | 60.1 |
| Example 11 | 91.2 | 76.1 | 59.9 |
| Example 12 | 91.3 | 75.3 | 59.2 |
| Example 13 | 91.5 | 76.8 | 60.5 |

Referring to Table 3, Examples 1- 4 and 13 exhibited an excellent or suitable capacity retention rate according to time during the high-temperature continuous charging, which confirmed that excellent or suitable storage characteristics were achieved even under the high temperature/high voltage.

On the contrary, Comparative Examples 1-5 were confirmed to exhibit a deteriorated capacity retention rate during the high-temperature continuous charging, compared to Examples 1-4 and 13.

In one or more embodiments, referring to FIG. 5, Examples 1 and 2, compared to Comparative Examples 1 and 2, were confirmed to exhibit excellent or suitable storage characteristics under the high temperature and high voltage driving.

While the subject matter of this disclosure has been described in connection with what is presently considered to be practical example embodiments, it is to be understood that the present disclosure is not limited to the disclosed embodiments, but, on the contrary, is intended to cover various suitable modifications and equivalent arrangements included within the spirit and scope of the appended claims.

### Description of Symbols

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising
a core comprising a lithium cobalt-based oxide, and
a coating layer on a surface of the core and comprising Y and La.

2. The positive electrode active material as claimed in claim 1, wherein
(a) based on a total weight of metal that excludes lithium in the positive electrode active material,
a sum of a content of Y and a content of La is greater than 0.1 wt% and less than 0.25 wt% and, preferably,
a content of Y is greater than 0.05 wt% and less than 0.2 wt%,
and/or
(b) based on a total weight of metal that excludes lithium in the positive electrode active material,
a content of La is 0.02 wt% and less than 0.1 wt%.

3. The positive electrode active material as claimed in claim 1 or claim 2, wherein
the coating layer further comprises M, and
M comprises Zr, Ti, Hf, Sc, Ce, W, Nb, or a combination thereof.

4. The positive electrode active material as claimed in any one of claims 1 to 3, wherein
based on a total weight of metal that excludes lithium in the positive electrode active material,
a sum of a content of Y, a content of La, and a content of M is greater than 0.2 wt% and less than or equal to 0.25 wt%.

5. The positive electrode active material as claimed in any one of claims 1 to3, wherein
based on a total weight of metal that excludes lithium in the positive electrode active material,
a content of M is 0.03 wt% to 0.1 wt%.

6. The positive electrode active material as claimed in any one of claims 1 to 5, wherein
the coating layer further comprises Al, and
a content of Al is 0.1 wt% to 1 wt% based on a total weight of metal that excludes lithium in the positive electrode active material.

7. The positive electrode active material as claimed in any one of claims 1 to 6, wherein
a thickness of the coating layer is 0.01 µm to 0.2 µm.

8. The positive electrode active material as claimed in claim 1, wherein the lithium cobalt-based oxide is represented by Chemical Formula 1:
Chemical Formula 1 Liₐ₁COₓ₁Mg_{y1}Al_{z1}M¹_{w1}O_{2-b1}X_{b1}
wherein, in Chemical Formula 1, 0.8≤a1≤1.8, 0.7≤x1≤1, 0≤y1≤0.01, 0≤z1≤0.05, 0≤w1≤0.15, 0.9≤x1+y1+z1+w1≤1.1, 0≤b1≤0.1,
M¹ is Zr, Y, La, Ti, B, Ba, Ca, Ce, Cr, Cu, F, Fe, Mn, Mo, Nb, P, S, Si, Sr, V, W, or a combination thereof, and X is F, P, S, or a combination thereof,
wherein
in Chemical Formula 1, preferably
0.001≤y1≤0.005 and 0.03≤z1≤0.04.

9. The positive electrode active material as claimed in any one of claims 1 to 8, wherein
the lithium cobalt-based oxide comprises large particles having an average particle diameter (D₅₀) of 9 µm to 25 µm and small particles having an average particle diameter (D₅₀) of 0.5 µm to 8 µm,
wherein, preferably,
a weight ratio of the small particles and the large particles is 5:5 to 1:9 and/or
a ratio of a weight (wt%) of Al included in the large particles to a weight (wt%) of Al included in the small particles is less than 1.

10. The positive electrode active material as claimed in any one of claims 1 to 9, wherein
the positive electrode active material is operated at a charge upper limit voltage of greater than or equal to 4.5 V.

11. A positive electrode, comprising
a positive electrode current collector, and
a positive electrode active material layer on the positive electrode current collector and comprising the positive electrode active material as claimed in any one of claims 1 to 10.

12. The positive electrode positive as claimed in claim 11, wherein
a loading level of the positive electrode active material layer is 10 mg/cm² to 30 mg/cm².

13. The positive electrode positive as claimed in claim 11 or claim 12, wherein
a mixture density of the positive electrode active material layer is 4.0 g/cc to 4.25 g/cc.

14. A rechargeable lithium battery, comprising
the positive electrode as claimed in any one of claims 11 to 13,
a negative electrode, and
an electrolyte.

15. The rechargeable lithium battery as claimed in claim 14, wherein
a charge upper limit voltage of the rechargeable lithium battery is greater than or equal to 4.5 V.
